Europäisches Patentamt

(19) European Patent Office

Office européen des brevets

(11) Veröffentlichungsnummer: **0 040 796**
**B1**

(12) **EUROPÄISCHE PATENTSCHRIFT**

(45) Veröffentlichungstag der Patentschrift:
**12.09.84**

(21) Anmeldenummer: **81103844.7**

(22) Anmeldetag: **19.05.81**

(51) Int. Cl.³: **G 06 K 9/20,** H 04 N 1/41,
G 06 F 15/20

(54) **Verfahren zum automatischen Klassifizieren von Bild- und Text- oder Graphikbereichen auf Druckvorlagen.**

(30) Priorität: **23.05.80 DE 3019836**

(43) Veröffentlichungstag der Anmeldung:
**02.12.81 Patentblatt 81/48**

(45) Bekanntmachung des Hinweises auf die Patenterteilung:
**12.09.84 Patentblatt 84/37**

(84) Benannte Vertragsstaaten:
**CH FR GB IT LI NL SE**

(56) Entgegenhaltungen:
**EP - A - 0 009 345**
**US - A - 3 805 237**

**PATTERN RECOGNITION IN PRACTICE, Proceedings of an International Workshop held in Amsterdam, 21.-23. Mai 1980, North-Holland Publishing Company, 1980 Amsterdam, NL. W. SCHERL et al.: "Automatic separation of text, graphic and picture segments in printed material" Seiten 213-221, 272
COMPUTER GRAPHICS AND IMAGE PROCESSING, Jahrgang 3, 1974, Seiten 83-89 New York, U.S.A. E.G. JOHNSON: "Printed text discrimination"**

(73) Patentinhaber: **SIEMENS AKTIENGESELLSCHAFT, Berlin und München Wittelsbacherplatz 2, D-8000 München 2 (DE)**

(72) Erfinder: **Abele, Ludwig, Dipl.-Ing., Lindenberg 17, D-8134 Pöcking (DE)**
Erfinder: **Wahl, Friedrich, Dr,, Kederbacherstrasse 12, D-8000 München 70 (DE)**
Erfinder: **Fuchsberger, Hermann, Schraudolphstrasse 13a, D-8000 München 40 (DE)**
Erfinder: **Scherl, Wolfgang, Dipl.-Ing., Kafkastrasse 54, D-8000 München 83 (DE)**

### Beschreibung

Die vorliegende Erfindung betrifft ein Verfahren zum automatischen Klassifizieren von Bild- und Text- oder Graphikbereichen auf Druckvorlagen.

In einem typischen Büro werden Schriftstücke erstellt, modifiziert und abgespeichert. Um diese Aufgaben möglichst wirtschaftlich lösen zu können, wurden Textbearbeitungsautomaten entwickelt, die auf einfachem Wege Fehlerkorrekturen, Einfügungen neuer Textteile, Zusammensetzungen von Texten mit unterschiedlichem Ursprung, beliebige Wiedergabe und eine elektronische Speicherung der die Textteile repräsentierenden Daten ermöglichen. Der Vorteil eines derartigen Textbearbeitungsautomaten gegenüber einer herkömmlichen Schreibmaschine liegt in seiner Flexibilität und Zeitersparnis beim Erstellen von Schriftstücken und der dadurch bedingten höheren Effektivität.

Ein wichtiges Kriterium bei der Entscheidung für einen Textbearbeitungsautomaten ist der Aufwand zum Speichern und/oder Übertragen von bereits auf Papier bestehender Information in und/oder auf den Textbearbeitungsautomaten. Eine manuelle Übertragung grosser Textmengen ist sehr aufwendig. Von Vorteil wäre eine automatische Übertragung.

Eine Betrachtung von in Frage kommenden Vorlagen ergibt, dass diese im wesentlichen aus Text-, Graphik- und/oder Bildteilen bestehen. Um eine optimale Codierung der diese Vorlagenteile repräsentierenden Daten sowie eine getrennte Manipulation dieser genannten Komponenten erreichen zu können, muss ein Verfahren und eine Vorrichtung zur Durchführung des Verfahrens geschaffen werden, die in der Lage sind, die Komponenten automatisch zu trennen und als solche zu klassifizieren.

Der vorliegenden Erfindung liegt die Aufgabe zugrunde, ein Verfahren anzugeben, mittels dessen die obengenannten Vorgänge auf einfache, schnelle und zuverlässige Art und Weise ausgeführt werden können.

Die der Erfindung zugrundeliegende Aufgabe wird durch ein Verfahren zum automatischen klassifizieren von Bild- und Text- oder Graphikbereichen auf Druckvorlagen, bei dem eine optoelektronische Abtastung der betreffenden Druckvorlage vorgesehen ist und bei dem die gewonnenen analogen Abtastwerte in eine diese repräsentierende digitale Information umgesetzt werden, die in ihrer Gesamtheit gespeichert wird, gelöst, das dadurch gekennzeichnet ist, dass innerhalb eines Speichers das für die eingelesene Vorlage betreffende Datenfeld in «Fenster» unterteilt wird, deren Kantenlängen derart festgelegt sind, dass sie den Abstand zwischen zwei Textzeilen nicht unterschreiten, und dass für jedes «Fenster» mittels eines Rechners ein Grauwerthistogramm erstellt wird, dessen statistische Parameter ermittelt und durch Vergleich mit Entscheidungsschwellwerten zur Klassifizierung des betreffenden «Fensters» als Text- bzw. Graphikausschnitt oder Bildausschnitt ausgewertet werden.

Die Erfindung bietet den Vorteil, dass ein verhältnismässig einfaches Verfahren, das demzufolge auch – insbesondere durch die Verfügbarkeit preisgünstiger und raumsparender Datenverarbeitungs-Hilfsmittel, wie beispielsweise Mikrocomputer – eine verhältnismässig einfache Anordnung zur Durchführung dieses Verfahrens voraussetzt, geschaffen wird, mittels dessen die genannte Aufgabe gelöst werden kann.

Weiterbildungen der Erfindung sind durch die in den Unteransprüchen angegebenen Merkmale gekennzeichnet.

Im folgenden wird die Erfindung an Hand mehrerer, Ausführungsbeispiele für die Erfindung betreffender Figuren im einzelnen erläutert.

Fig. 1 zeigt schematisch das Blockschaltbild einer Anordnung zur Durchführung des erfindungsgemässen Verfahrens mit der abzutastenden Druckvorlage D, einem Video-Abtaster V, einem Analog/Digital-Wandler A/D , einem Speicher S und einem Rechner R.

Fig. 2 zeigt schematisch ein erstes typisches Grauwerthistogramm, das einen Textbereich betrifft.

Fig. 3 zeigt schematisch ein Grauwerthistogramm, das einen Bildbereich betrifft.

Fig. 4 zeigt einen schraffierten Bereich oberhalb und unterhalb einer quadratischen Kurve $\hat{C}$, der als Prüfschablone für eine Entscheidung zwischen Text- oder Graphik- und Bildbereichen dient.

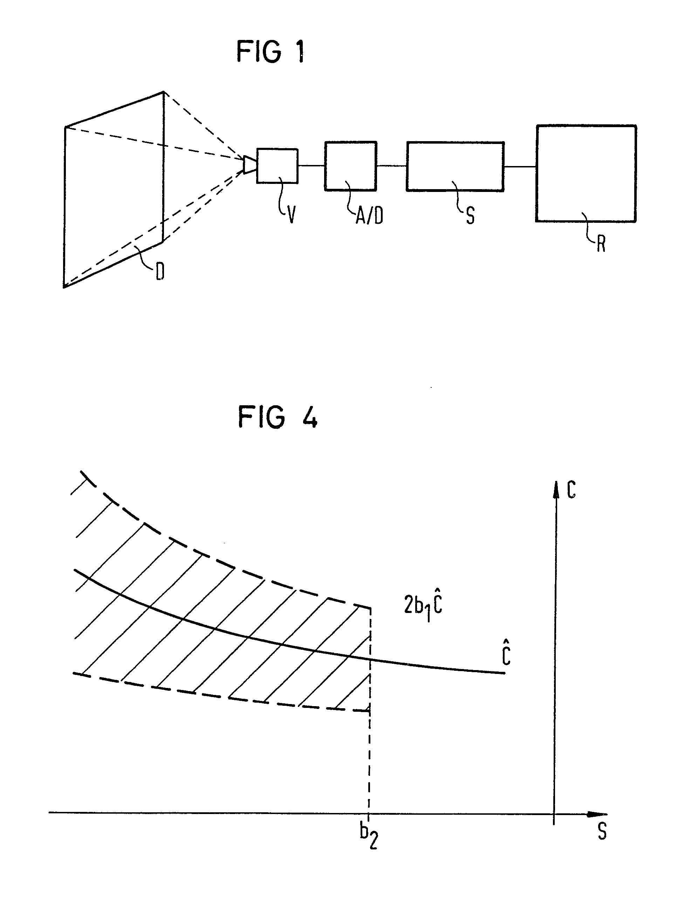

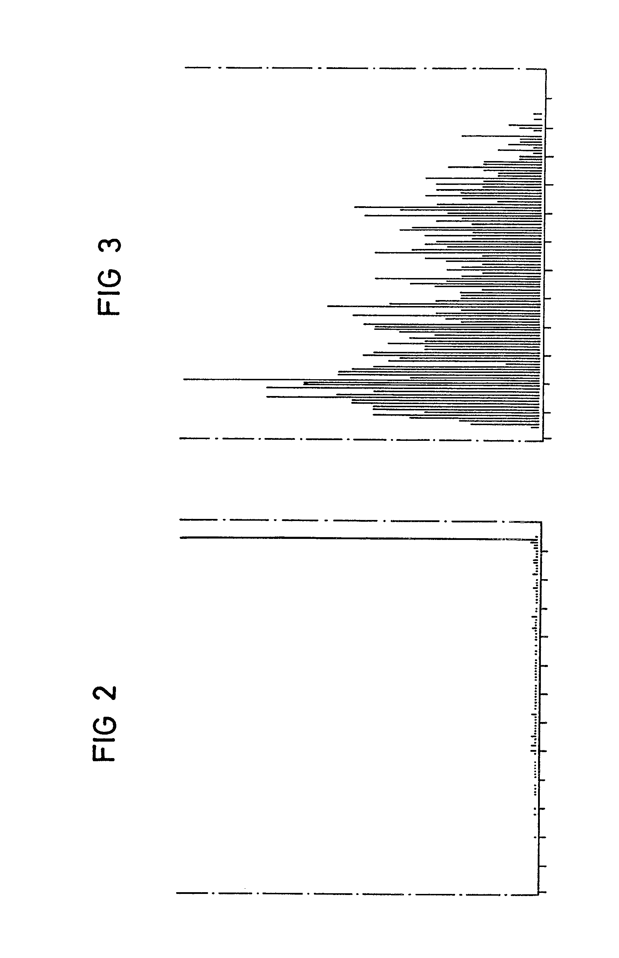

Wie bereits erläutert, zeigt Fig. 1 schematisch das Blockschaltbild einer Anordnung zur Durchführung des erfindungsgemässen Verfahrens. Mit dieser Anordnung, die z.B. aus EP-A-9345 an sich bekannt ist, wird jeweils eine Seite der Druckvorlage D über ein geeignetes Videosystem, nämlich in diesem Ausführungsbeispiel einen Video-Abtaster V abgetastet. Die Ausgangssignale dieses Video-Abtasters V werden einem Analog/Digital-Wandler A/D zugeführt. Die Signalausgänge dieses Analog/Digital-Wandlers A/D sind mit Signaleingängen eines vorzugsweise als Halbleiterspeicher ausgeführten Speichers S verbunden. zu diesem Speicher hat ein Rechner R, der vorzugsweise als Mikrocomputer ausgeführt ist, Zugriff. Der Rechner R verarbeitet nach dem erfindungsgemässen Verfahren die in dem Speicher S abgespeicherten Daten zum Ermitteln der Parameter der abgetasteten Druckvorlage D.

Dazu wird die Information der eingelesenen Druckvorlage D, die ein eine Vielzahl von Speicherzellen des Speichers S umfassendes Datenfeld darstellen, mit einem dieses Datenfeld abdeckenden Gitter von kleinen «Fenstern» überzogen, wobei das Gitter derart ausgelegt ist, dass sich die «Fenster» teilweise überlappen. Für jedes dieser «Fenster» werden statistische Parameter der betreffenden Teilinformation ermittelt und in einem weiteren Schritt zu einer Entscheidung herangezogen. Um sichere Aussagen machen zu können, muss die Kantenlänge der «Fenster» so ausgewählt werden, dass sie den Abstand zwischen zwei Textzeilen nicht unterschreitet.

Zur Ermittlung der statistischen Parameter wird nun für jedes «Fenster» ein Grauwerthistogramm, vgl. Fig. 2 und 3, erstellt. Verfahren zur Erstellung solcher Grauwerthistogramme mittels Rechner sind an sich bekannt.

Im folgenden werden zwei verschiedene Verfahren ins einzelne gehend beschrieben, mittels derer eine Auswertung von Grauwerthistogrammen zum Zwecke der automatischen Erkennung von Bild- und Text- oder Graphikbereichen auf Druckvorlagen ermöglicht ist.

Wie bereits erläutert, zeigt Fig. 2 schematisch ein erstes typisches Grauwerthistogramm, das einen Textbereich betrifft. Fig. 3 zeigt, wie ebenfalls bereits erläutert, schematisch ein Grauwerthistogramm, das einen Bildbereich betrifft. Charakteristisch für das in Fig. 2 gezeigte Beispiel eines Text-Grauwerthistogramms ist die ausgeprägte Häufigkeitsspitze für sehr helle Vorlagenteile. Ihre Ursache liegt in dem hohen Hintergrundanteil bei Text. Der Hintergrund ist in diesem Fall der hellste Bereich der eingelesenen Vorlage. Bedingt durch die Ausdehnung des Abtaststrahls des Video-Abtasters V ergeben die Schriftzeichen keine ausgeprägte Spitze im Histogramm, sondern vielmehr eine breitere Verteilung bei dunkleren Grauwerten. Für Bild-Grauwerthistogramme können keine derartig scharfen Regeln wie für Text-Grauwerthistogramme angegeben werden. Wie Fig. 3 verdeutlicht, ist bei Bildern der Anteil dunklerer Grauwerte höher. Oft wird auch nicht die maximale Helligkeit des Papierhintergrundes erreicht.

Diese Tatsache kann zur Unterscheidung von Bild- und Text- oder Graphik-Vorlagen herangezogen werden. Dazu wird in einem ersten Schritt der maximal vorkommende Helligkeitswert $i_{max}$ ermittelt. Gemäss der Formel

$$K = \frac{\sum\limits_{i = S}^{i_{max}} h\ (i)}{N}$$

wobei

$i_{max}$ = hellster vorkommender Grauwert
$S$ = 0.8 $i_{max}$
$N$ = Gesamtzahl der Abtastungen
$i$ = Index für die Helligkeit des Grauwertes
$h\ (i)$ = Anzahl der Grauwerte mit der Helligkeit i im «Fenster»

sind, wird der Prozentsatz sehr heller Anteile im «Fenster» errechnet. K ist ein Merkmal zur Unterscheidung zwischen Bild- und Textbereichen. Die sich ergebenden Werte K werden einer Entscheidungsschwelle t unterworfen. t wurde gemäss einem Ausführungsbeispiel für die Erfindung empirisch auf 0.4 gelegt. Für den Fall K < t wird das «Fenster» als Bildbereich klassifiziert. Für den Fall

$K \gtrsim t$ wird das «Fenster» als Textbereich klassifiziert.

Nach einem alternativen Verfahren zur Auswertung der Grauwerthistogramme wird zunächst ein Wertepaar S,C für jedes «Fenster» errechnet, wobei der Wert S nach der Formel

$$S = \sum (i-\mu)^3\ h\ (i)/\delta^3$$

und der Wert C nach der Formel

$$C = \sum (i-\mu)^4\ h\ (i)/\delta^4$$

errechnet werden und wobei i den jeweiligen Helligkeitswert, h (i) den zu i gehörenden Histogrammwert, nämlich die Anzahl der Grauwerte mit der Helligkeit i in einem «Fenster», $\mu$ den Mittelwert des Gesamtbildes und $\delta$ einen Wert für die Abweichung von einem Standardwert darstellen. Aufgrund der typischen Asymmetrie des Text-Grauwerthistogramms liegen die Wertepaare S/C für Text innerhalb eines Bereiches entlang einer quadratischen Kurve nach der Form

$$\hat{C} = a_2 S^2 + a_1 S + a_0$$

Dieser Bereich ist in Fig. 4 gezeigt. Seine Grenzen sind durch die Beziehungen $|C-\hat{C}| < b_1 \hat{C}$ (entlang der C-Achse) und $S < b_2$ (entlang der S-Achse) definiert, wobei $\hat{C}$ die quadratische Kurve darstellt und wobei $a_0$, $a_1$ und $a_2$ sowie $b_1$ und $b_2$ als empirisch festgelegte Konstanten eingehen.

Die Prüfung, ob die Wertepaare S/C innerhalb oder ausserhalb des genannten Bereiches liegen, wird mit an sich bekannten Mitteln durch den Rechner R, der die dazu erforderlichen Daten aus dem Speicher S abruft, vorgenommen.

Eine vorteilhafte Weiterbildung der Erfindung sieht vor, dass die jeweiligen Kantenlängen eines «Fensters» nicht grösser als der Abstand zwischen zwei bis drei Zeilenabschnitten einer Textvorlage ist.

## Patentansprüche

1. Verfahren zum automatischen Klassifizieren von Bild- und Text- oder Graphikbereichen auf Druckvorlagen, bei dem eine opto-elektronische Abtastung der betreffenden Druckvorlage vorgesehen ist und bei dem die gewonnenen analogen Abtastwerte in eine diese repräsentierende digitale Information umgesetzt werden, die in ihrer Gesamtheit gespeichert wird, dadurch gekennzeichnet, dass innerhalb eines Speichers (S) das für die eingelesene Vorlage betreffende Datenfeld in «Fenster» unterteilt wird, deren Kantenlängen derart festgelegt sind, dass sie den Abstand zwischen zwei Textzeilen nicht unterschreiten, und dass für jedes «Fenster» mittels eines Rechners (R) ein Grauwerthistogramm erstellt wird, dessen statistische Parameter ermittelt und durch Vergleich mit Entscheidungsschwellwerten zur Klassifizierung des betreffenden «Fensters» als Text- bzw. Graphikausschnitt oder Bildausschnitt ausgeweitet werden.

2. Verfahren nach Anspruch 1, dadurch gekennzeichnet, dass zur Ermittlung der statistischen Parameter des Grauwerthistogramms in einem ersten Schritt der maximal vorkommende Helligkeitswert ($i_{max}$) ermittelt wird, dass in einem zweiten Schritt ein Prozentsatz (K) der Bildanteile ermittelt wird, der helligkeitsmässig zwischen der maximal aufgetretenen Helligkeit und einer dazu prozentual vorgegebenen Helligkeitsuntergrenze liegt, und dass der Prozentsatz (K) für jedes «Fenster» ermittelt und weiter verarbeitet wird.

3. Verfahren nach Anspruch 2, dadurch gekennzeichnet, dass alle ermittelten Prozentsätze (K) einer Entscheidungsschwelle (t) unterworfen werden und dass für den Fall, dass der Prozentsatz (K) kleiner als der Wert der Entscheidungsschwelle (t) ist, das «Fenster» als Bildbereich oder für den Fall, dass der Prozentsatz (K) gleich oder grösser als der Wert der Entscheidungsschwelle (t) ist, das «Fenster» als Text- oder Graphikbereich klassifiziert wird.

4. Verfahren nach Anspruch 1, dadurch gekennzeichnet, dass als statistische Parameter des Grauwerthistogramms ein Wertepaar (S, C) für jedes «Fenster» errechnet wird, wobei der Wert S nach der Formel

$$S = \sum (i - \mu)^3 \, h\,(i)/\sigma^3$$

und der Wert C nach der Formel

$$C = \sum (i - \mu)^4 \, h\,(i)/\sigma^4$$

errechnet wird und wobei i den jeweiligen Helligkeitswert, h (i) den zu i gehörenden Histogrammwert, nämlich die Anzahl der Grauwerte mit der Helligkeit i in einem «Fenster», $\mu$ den Mittelwert des Gesamtbildes und $\sigma$ einen Wert für die Abweichung von einem Standardwert darstellen, und dass ein unbekanntes «Fenster» als Textbereich klassifiziert wird, wenn das zugehörige Wertepaar (S, C) sich innerhalb einer Fläche befindet, deren Grenzen durch die Beziehungen

$$|C-\hat{C}| < b_1\hat{C} \quad \text{(entlang der C-Achse)}$$

und

$$S < b_2 \quad \text{(entlang der S-Achse)}$$

definiert sind, wobei $\hat{C}$ eine quadratische Kurve der Form

$$\hat{C} = a_2 S^2 + a_1 S + a_0$$

darstellt und wobei $a_0$, $a_1$ und $a_2$ sowie $b_1$, $b_2$ als empirisch festgelegte Konstanten eingehen.

5. Verfahren nach Anspruch 1, dadurch gekennzeichnet, dass das Datenfeld mit einem Gitter von «Fenstern» überzogen wird, das derart ausgelegt ist, dass sich die «Fenster» teilweise überlappen.

**Revendications**

1. Procédé de classement automatique de parties d'image et de texte ou de graphique sur des originaux imprimés, selon lequel il est prévu une exploration opto-électronique de l'original imprimé considéré et selon lequel les valeurs d'exploration analogiques obtenues sont converties en une information numérique les représentant et qui est mémorisée dans sa totalité, caractérisé par le fait qu'à l'intérieur d'une mémoire (S), le champ de données concernant l'original enregistré est subdivisé en «fenêtres», dont les longueurs des bords sont déterminées de manière à ne pas être inférieures à la distance entre deux lignes du texte et qu'à l'aide d'un calculateur (R) on établit pour chaque «fenêtre» un histogramme des valeurs de gris, on détermine les paramètres statistiques de cet histogramme et on les évalue par comparaison à des valeurs de seuil de décision pour réaliser la classification de la «fenêtre» considérée en tant que partie de texte ou d'un graphique ou partie d'une image.

2. Procédé suivant la revendication 1, caractérisé par le fait que pour la détermination des paramètres statiques de l'histogramme des valeurs de gris on détermine, au cours d'une première phase opératoire, la valeur de luminosité maximale présente ($i_{max}$), qu'on détermine au cours d'une seconde phase opératoire un pourcentage (K) des parties de l'image, dont la luminosité se situe entre la luminosité maximale apparue et une limite inférieure de luminosité prédéterminée à cet effet sous la forme d'un pourcentage, et qu'on détermine le pourcentage (K) pour chaque «fenêtre» et qu'on poursuit le traitement sur ce pourcentage.

3. Procédé suivant la revendication 2, caractérisé par le fait qu'on compare tous les pourcentages déterminés (K) à un seuil de décision (t) et que dans le cas où le pourcentage (K) est inférieur à la valeur du seuil de décision (t), la «fenêtre» est classée en tant que partie d'image, ou que dans le cas où le pourcentage (K) est égal ou supérieur à la valeur du seuil de décision (t), la «fenêtre» est classée en tant que partie de texte ou de graphique.

4. Procédé suivant la revendication 1, caractérisé par le fait que l'on calcule, en tant que paramètres statistiques de l'histogramme des valeurs de gris, un couple de valeurs (S, C) pour chaque «fenêtre», la valeur S étant calculée selon la formule

$$S = \sum (i - \mu)^3 \, h\,(i)/\sigma^3$$

et la valeur C étant calculée selon la formule

$$C = \sum (i - \mu)^4 \, h\,(i)/\sigma^4$$

avec i représentant la valeur respective de luminosité, h (i) la valeur de l'histogramme associée à i, à savoir le nombre des valeurs de gris possédant la luminosité i dans une «fenêtre», $\mu$ la valeur moyenne de l'ensemble de l'image et $\sigma$ une valeur de l'écart par rapport à une valeur type, et qu'on classe une «fenêtre» inconnue en tant que partie de texte lorsque le couple associé de valeurs (S, C) est situé à l'intérieur d'une surface dont les limites sont définies par les relations

$$|C-\hat{C}| < b_1\hat{C} \quad \text{(suivant l'axe C)}$$

et

$$S < b_2 \quad \text{(suivant l'axe S)}$$

$\hat{C}$ représentant une courbe du second degré de la forme

$$\hat{C} = a_2 S^2 + a_1 S + a_0$$

et $a_0$, $a_1$ et $a_2$ ainsi que $b_1$, $b_2$ étant des constantes fixées de façon empirique.

5. Procédé suivant la revendication 1, caractérisé par le fait que le champ de donées est recouvert par un réseau de «fenêtres», qui est agencé de manière que les «fenêtres» se recouvrent partiellement.

## Claims

1. A method for the automatic differentation between image and text or graphic regions on prints, using opto-electronic scanning of the respective printed copy, wherein the analogue scanning values obtained are converted into digital information which represents said values and which is stored in its entirety, characterised in that within a store (S) the data field relating to the read-in copy is divided into «windows» whose edge lengths are determined in such a manner that they do not fall below the spacing between two text lines, and that for each «window» a grey value histogram is provided by means of a computer (R), the statistic parameters of which grey value histogram are determined and analysed by comparison with decision threshold values in order to classify the respective «window» as text or graphic detail or image detail.

2. A method as claimed in Claim 1, characterised in that in order to determine the statistic parameter of the grey value histogram the maximum occurring brightness value ($i_{max}$) is determined in a first step, that in a second step a percentage (K) of the image portions is determined, which percentage ranges in terms of brightness between the maximum occurring brightness and a lower brightness level determined proportionally thereto, and that the percentage (K) is determined for each «window» and further processed.

3. A method as claimed in Claim 2, characterised in that all determined percentages (K) are subject to a decision threshold (t) and that in the event that the percentage (K) is smaller than the value of the decision threshold (t) the «window» is classified as an image region or in the event that the percentage (K) is equal to or greater than the value of the decision threshold (t) the «window» is classified as a text or graphic region.

4. A method as claimed in Claim 1, characterised in that as statistic parameters of the grey value histogram, a value pair (S,C) is calculated for each «window», where the value S is caculated in accordance with the formula

$$S = \sum (i - \mu)^3 \, h\,(i)/\sigma^3$$

and the value C is caculated in accordance with the formula

$$C = \sum (i - \mu)^4 \, h\,(i)/\sigma^4$$

and where i represents the respective brightness value, h(i) the histogram value assigned to i, namely the number of the grey values having the brightness i in a «window», $\mu$ represents the mean value of the overall image and $\sigma$ a value for the deviation from a standard value, and that an unknown «window» is classified as a text region if the assigned value pair (S,C) is within a surface, whose borders are defined by the relations

$$|C-\hat{C}| < b_1\hat{C} \quad \text{(along the C-axis)}$$

and

$$S < b_2 \quad \text{(along the S-axis)}$$

where C represents a square graph of the form

$$\hat{C} = a_2 S^2 + a_1 S + a_0$$

and where $a_0$, $a_1$ and $a_2$ and $b_1$, $b_2$ represent empirically determined constants.

5. A method as claimed in Claim 1, characterised in that the data field is covered with a grid of «windows» which is so contrived that the «windows» partially overlap one another.

## FIG 1

V

A/D

S

R

D

## FIG 4

$\hat{C}$

$2b_1\hat{C}$

C

$b_2$

S

0 040 796

# FIG 2

# FIG 3